# FASCICULE DE BREVET EUROPEEN

(11) **EP 0 514 479 B1**
(45) Date de publication et mention de la délivrance du brevet: **18.05.1994**
(21) Numéro de dépôt: 91904759.7
(22) Date de dépôt: 04.02.1991
(51) Int. Cl.: B65H 75/28, G03B 17/30

(54) **EMBALLAGE DISTRIBUTEUR POUR MATERIAU EN BANDE**
AUSGABEVERPACKUNG FÜR BAHNFÖRMIGES MATERIAL
STRIP MATERIAL DISPENSER

(30) Priorité: 05.02.1990 FR 9001487
(43) Date de publication de la demande: 25.11.1992
(73) Titulaire: KODAK-PATHE, F-75594 Paris Cedex 12 (FR); EASTMAN KODAK COMPANY, Rochester, New York 14650-2201 (US)
(72) Inventeur: BLANDIN, Christophe Louis Michel, F-71102 Chalon-sur-Saône Cédex (FR)
(74) Mandataire: Buff, Michel
(86) Numéro de dépôt international: FR9100073
(87) Numéro de publication internationale: WO9111383

(56) Documents cités:
- EP-A- 0 053 312

## Description

La présente invention concerne les emballages et vise notamment un emballage distributeur pour matériau en bande photosensible. L'invention concerne plus particulièrement un dispositif pour la fixation de l'extrémité d'une bande souple, telle qu'une bande photographique sur un noyau.

On a déjà proposé de nombreux dispositifs pour assurer la fixation de l'extrémité d'une bande souple sur un noyau, notamment pour les produits photographiques qui, habituellement, se dévident d'une bobine débitrice pour s'enrouler sur une bobine réceptrice ; en photographie, il est souvent souhaitable et même nécessaire de réenrouler sur la bobine débitrice le produit qui y était précédemment disposé et qui était placé momentanément sur la bobine réceptrice et, pour cela, il faut éviter que l'extrémité de la bande qui était fixée initialement sur le noyau de la bobine débitrice ne s'en sépare. Il faut donc assurer une fixation efficace de cette extrémité de la bande sur le noyau par un dispositif approprié.

De même, pour des produits photographiques tels que les films 35 mm, il est souhaitable que le moyen utilisé pour la fixation de l'extrémité de la bande au noyau ne sorte-pas hors de la bobine lorsque ladite bande est complètement déroulée.

Ainsi, dans la technique antérieure, il est connu de fixer l'extrémité d'une bande souple du type film photographique directement au noyau d'une bobine à l'aide d'un adhésif approprié. Une telle opération ne peut se faire qu'avant le montage complet de la bobine. Or, pour des produits photosensibles, il est nécessaire de les maintenir à l'écart de la lumière. Ceci implique que l'opération de fixation de l'extrémité du film au noyau de la bobine ainsi que toutes les opérations de montage de la bobine soient réalisées au noir complet nécessitant par conséquent des équipements complexes et coûteux.

Le document EP-A-053312 décrit une bobine pour matériau en bande, ladite bande étant accrochée au noyau de la bobine par l'intermédiaire d'une amorce fixée au niveau de la partie centrale du noyau, laquelle présente une zone de moindre épaisseur par rapport au reste du noyau. Selon ce document, l'amorce et la bande s'enroulent autour d'un même axe.

Ainsi l'invention concerne-t-elle un noyau d'enroulement ainsi qu'une bobine pour matériau en bande du type film photographique, comprenant un dispositif de fixation de l'extrémité de la bande au noyau de la bobine et nécessitant, pour le montage de ladite bobine, des équipements moins complexes que ceux utilisés dans la technique antérieure.

Aussi l'invention concerne-t-elle une bobine constituée d'un étui pourvu sur sensiblement toute sa longueur d'une étroite ouverture et contenant un rouleau d'un matériau en bande enroulé sur un noyau et destiné à être distribué par l'ouverture de l'étui, l'extrémité de ladite bande étant fixée au noyau par l'intermédiaire d'une amorce dont la longueur est telle que lorsqu'elle est déroulée, ladite amorce émerge de ladite étroite ouverture afin de pouvoir y accrocher une extrémité de ladite bande, ledit noyau définissant deux axes d'enroulement parallèles, un premier axe auquel on fixe l'une des extrémités de l'amorce par un moyen approprié et autour duquel s'enroule l'amorce, un second axe correspondant à l'axe de la bobine autour duquel s'enroule la bande, le support d'enroulement de ladite bande étant défini par la surface du noyau, ledit support d'enroulement étant, sur au moins une partie de sa circonférence, physiquement interrompu au niveau de la zone d'enroulement de l'amorce sur une largeur au moins égale à la largeur de l'amorce, l'extrémité de la bande étant accrochée par un moyen approprié à l'extrémité libre de l'amorce, ladite bobine étant caractérisée en ce que les deux axes sont distants l'un de l'autre de telle sorte qu'après avoir déroulé complètement ledit rouleau de matériau en bande, par traction sur ladite bande, ladite amorce reste enroulée sur ledit premier axe et n'émerge pas de ladite étroite ouverture.

L'invention concerne également un noyau de bobine pour matériau en bande, dans lequel l'extrémité dudit matériau en bande est fixée au noyau par l'intermédiaire d'une amorce, ledit noyau définissant deux axes parallèles :
- un premier axe auquel on fixe l'une des extrémités de l'amorce par un moyen approprié et autour duquel s'enroule l'amorce,
- un second axe correspondant à l'axe de la bobine et autour duquel s'enroule la bande, ladite bande étant accrochée à l'extrémité libre de l'amorce par n'importe quel moyen approprié, ledit noyau étant caractérisé en ce que les deux axes sont distants l'un de l'autre.

La description qui suit sera faite en faisant référence aux dessins dans lesquels :
- la Fig. 1 représente une bobine pour matériau en bande comportant un dispositif d'accrochage tel qu'utilisé dans la technique antérieure,
- la Fig. 2 représente de manière schématique un noyau de bobine selon la technique antérieure,
- la Fig. 3 représente de manière schématique un noyau de bobine selon la présente invention,
- la Fig. 4 représente une vue en coupe d'une bobine selon l'invention lorsque le film est complètement enroulé,
- la Fig. 5 représente une vue en coupe d'une bobine selon l'invention lorsque le film est complètement déroulé.

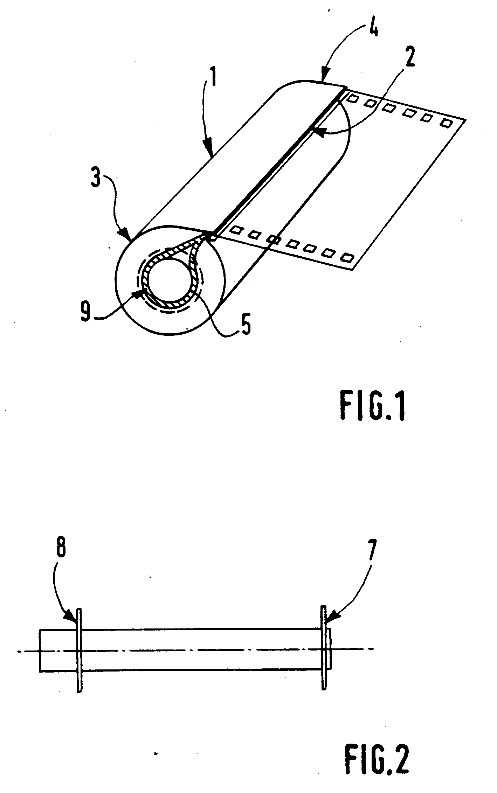

La Fig. 1 à laquelle on fait maintenant référence représente une bobine pour matériau en bande tel qu'un film photographique et comportant un dispositif d'accrochage tel qu'utilisé dans la technique antérieure.

La bobine représentée en Fig. 1 comprend un étui cylindrique 1 présentant sur, sensiblement, toute sa longueur une étroite ouverture (2) protégée contre la lumière par deux rebords de velours ou étoffe ou matière équivalente. Chaque extrémité de l'étui cylindrique se termine par une plaque d'extrémité (3, 4) métallique (non représentée) comportant un bord rabattu qui forme autour des plaques d'extrémité une bague périphérique. Le produit en bande est enroulé sur un noyau comportant un arbre cylindrique (5) autour duquel s'enroule le film. Le noyau représenté à la Fig. 2 comporte deux joues circulaires (7, 8) permettant de bloquer en translation le noyau à l'intérieur de la bobine. Selon la technique connue représentée à la Fig. 1 l'extrémité de la bande est directement fixée au noyau au moyen, par exemple, d'un adhésif (9). Cette opération s'effectue au noir avant le montage de la bobine et a pour conséquence de compliquer les équipements utilisés.

Selon la présente invention, l'étui cylindrique est du type de celui décrit précédemment et l'invention en réalité porte sur le noyau ainsi que sur le dispositif d'accrochage de la bande audit noyau.

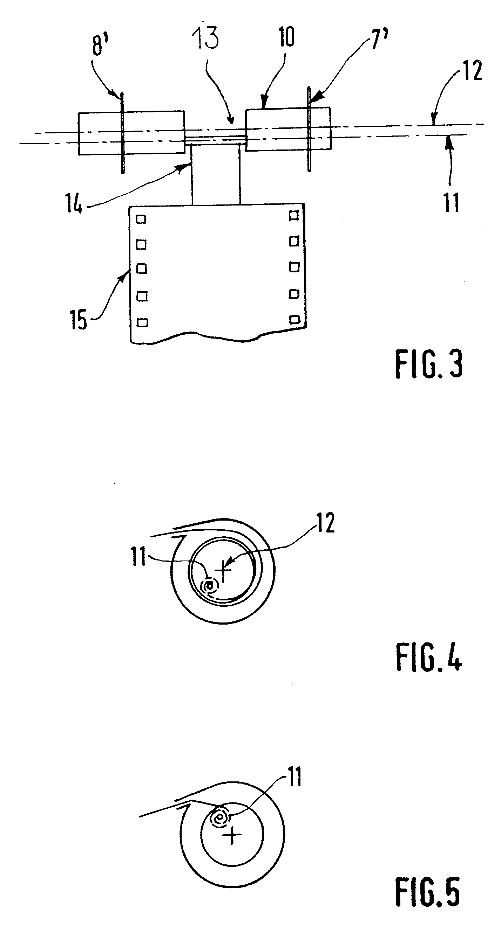

La Fig. 3 représente un exemple de réalisation d'un noyau utilisé selon la présente invention.

Les extrémités du noyau sont cylindriques et identiques à celles du noyau décrit précédemment. Il comporte en chacune de ses extrémités une joue circulaire (7', 8') permettant d'immobiliser en translation le noyau à l'intérieur de la bobine. L'arbre du noyau (10) est évidé en sa partie centrale de façon à définir un axe d'enroulement (11) de l'amorce (14) distinct de l'axe de la bobine (12), la largeur de l'évidement (13) étant au moins égale à la largeur de l'amorce et bien sur inférieure à la largeur du film (15) de façon à ce que l'arbre du film définisse en chacune des extrémités du noyau un support d'enroulement du film autour de l'axe central (12) du noyau qui correspond à l'axe de la bobine. L'évidement central du noyau est tel que l'axe d'enroulement de l'amorce est sensiblement parallèle à l'axe de la bobine et distant de l'axe de ladite bobine.

De même dans un mode de réalisation préférentiel l'axe d'enroulement de l'amorce est disposé de manière à ce que lorsque l'amorce (14) est complètement enroulée, celle-ci ne provoque pas de surépaisseur par rapport à l'arbre du noyau (10) servant de support d'enroulement du film (15).

En cours de montage de la bobine, l'amorce (14) est fixée à la partie centrale du noyau (10) par n'importe quel moyen approprié. Elle peut être, par exemple, fixée par collage, ou au moyen d'un adhésif. Le noyau ainsi fixé à l'amorce est ensuite inséré à l'intérieur de l'étui cylindrique en maintenant l'extrémité de ladite amorce à l'extérieur de ladite étroite ouverture aménagée dans ledit étui. A cet effet la longueur de l'amorce est telle que, lorsqu'elle est déroulée, ladite amorce émerge de ladite étroite ouverture afin de pouvoir y accrocher une extrémité du film. Selon un mode de réalisation particulier la longueur de l'amorce est de l'ordre de 4 à 5 cm. Il ne reste plus alors qu'à effectuer, à l'écart de la lumière, l'opération d'accrochage du film à l'extrémité libre de l'amorce ainsi que l'opération d'enroulement du film à l'intérieur de la bobine. L'accrochage du film à l'amorce peut se faire également par tout moyen approprié. Il peut s'agir par exemple d'un collage, soudage HF ou d'un adhésif.

Un tel noyau, grâce à l'excentricité de l'axe d'enroulement de l'amorce (11) par rapport à celui du film (12), permet, lorsque l'on déroule complètement le film (15) d'empêcher l'amorce (14) de se dérouler et d'apparaître à l'extérieur de ladite bobine. Pour cela, il est nécessaire que la distance entre les deux axes d'enroulement soit supérieure à l'épaisseur de l'enroulement de l'amorce ; ceci implique que lorsque l'amorce est complètement enroulée, celle-ci n'atteigne pas l'axe d'enroulement du film.

La Fig. 4 à laquelle on fait maintenant référence représente une vue en coupe d'une bobine selon l'invention lorsque le film est enroulé à l'intérieur de ladite bobine. Le film (traits pleins) est enroulé autour de l'axe de la bobine (12) alors que l'amorce (traits interrompus) est enroulée sur un second axe (11) excentré par rapport au premier.

Dans le cas d'un film 35 mm le diamètre de l'arbre du noyau est de l'ordre de 1 cm, le diamètre du support d'enroulement de l'amorce est de l'ordre de 2 à 3 mm. Ces grandeurs varient bien sur en fonction des efforts de traction qui sont demandés à une telle bobine pendant l'enroulement ou le déroulement du film.

La Fig. 5 représente également une vue en coupe d'une bobine selon l'invention lorsque le film est déroulé. En raison de la distance qui sépare les deux axes, lorsque le film est complètement déroulé, même si l'on continue d'exercer une force de traction, l'amorce reste enroulée sur son axe (11) et n'émerge pas de ladite étroite ouverture.

## Revendications

1. Bobine constituée d'un étui (1) pourvu sur sensiblement toute sa longueur d'une étroite ouverture (2) et contenant un rouleau d'un matériau en bande enroulé sur un noyau (5) et destiné à être distribué par l'ouverture (2) de l'étui (1), l'extrémité de ladite bande étant fixée au noyau par l'intermédiaire d'une amorce (14) dont la longueur est telle que lorsqu'elle est déroulée, ladite amorce émerge de ladite étroite ouverture (2) afin de pouvoir y accrocher une extrémité de ladite bande (15), ledit noyau (5) définissant deux axes d'enroulement parallèles (11, 12), un premier axe (11) auquel on fixe l'une des extrémités de l'amorce (14) par un moyen approprié et autour duquel s'enroule l'amorce, un second axe (12) correspondant à l'axe de la bobine autour duquel s'enroule la bande (15), le support d'enroulement de ladite bande étant défini par la surface du noyau, ledit support d'enroulement étant, sur au moins une partie de sa circonférence, physiquement interrompu au niveau de la zone d'enroulement de l'amorce sur une largeur au moins égale à la largeur de l'amorce, l'extrémité de la bande étant accrochée par un moyen approprié à l'extrémité libre de l'amorce, ladite bobine étant caractérisée en ce que les deux axes (11, 12) sont distants l'un de l'autre de telle sorte qu'après avoir déroulé complètement ledit rouleau de matériau en bande, par traction sur ladite bande, ladite amorce reste enroulée sur ledit premier axe (11) et n'émerge pas de ladite étroite ouverture (2).

2. Bobine selon la revendication 1, caractérisée en ce que l'amorce (14) s'enroule sur le premier axe (11), sans surépaisseur par rapport à l'arbre du noyau (10).

3. Bobine selon l'une quelconque des revendications 1 à 2 caractérisée en ce que la longueur de l'amorce (14) est de l'ordre de 5 cm.

4. Bobine selon l'une quelconque des revendications 1 à 3 caractérisée en ce que l'amorce (14) est fixée au premier axe (11) par collage.

5. Bobine selon l'une quelconque des revendications 1 à 3 caractérisée en ce que l'amorce (14) est fixée au premier axe (11) au moyen d'un adhésif.

6. Bobine selon l'une quelconque des revendications 1 à 5 caractérisée en ce que l'amorce est fixée à la bande (15) par collage.

7. Bobine selon l'une quelconque des revendications 1 à 5 caractérisée en ce que l'amorce (14) est fixée à la bande (15) au moyen d'un adhésif.

8. Noyau de bobine pour matériau en bande, dans lequel l'extrémité dudit matériau en bande (15) est fixée au noyau par l'intermédiaire d'une amorce (14), ledit noyau définissant deux axes parallèles (11, 12) :
- un premier axe (11) auquel on fixe l'une des extrémités de l'amorce par un moyen approprié et autour duquel s'enroule l'amorce (14),
- un second axe (12) correspondant à l'axe de la bobine et autour duquel s'enroule la bande (15), ladite bande (15) étant accrochée à l'extrémité libre de l'amorce (14) par n'importe quel moyen approprié, ledit noyau étant caractérisé en ce que les deux axes (11, 12) sont distants l'un de l'autre.

## Patentansprüche

1. Spule mit einer Kassette (1), die mit einem im wesentlichen über ihre gesamte Länge verlaufenden Öffnungsspalt (2) versehen ist und eine Rolle bandförmigen Materials enthält, das auf einem Spulenkern (5) aufgewickelt und durch den Spalt (2) der Kassette (1) ausförderbar ist und dessen Ende an dem Spulenkern mittels eines Vorspannabschnitts (14) befestigt ist, dessen Länge so bemessen ist, daß er beim Abwickeln aus dem Öffnungsspalt (2) heraustritt, so daß ein Ende des bandförmigen Materials (15) an ihm befestigbar ist, wobei im Spulenkern zwei parallel verlaufende Wickelachsen (11, 12) angeordnet sind und auf der ersten (11) dieser Achsen eines der Enden des Vorspannabschnitts durch geeignete Mittel befestigt und der Vorspannabschnitt aufgewickelt ist und auf einer zweiten der Spulenachse entprechenden Achse (12) das bandförmige Material (15) aufgewickelt ist, wobei der Aufwickelträger von der Kernoberfläche gebildet ist, die mindestens in einem Teil ihres Umfangs auf der Höhe des Aufwickelbereichs des Vorspannabschnitts auf einer Breite unterbrochen ist, die mindestens gleich der Breite des Vorspannabschnitts ist, und wobei das Ende des bandförmigen Materials durch geeignete Mittel mit dem freien Ende des Vorspannabschnitts verbunden ist, **dadurch ge****kennzeichnet,**
daß die beiden Achsen (11, 12) derart im Abstand voneinander angeordnet sind, daß nach dem vollständigen Abwickeln des bandförmigen Materi- als unter Zugwirkung der Vorspannabschnitt auf der ersten Achse (11) aufgewickelt bleibt und nicht aus dem Öffnungsspalt (2) heraustritt.

2. Spule nach Anspruch 1, dadurch gekennzeichnet, daß der Vorspannabschnitt (14) auf der ersten Achse (11) aufgewickelt ist, ohne daß dadurch die Dicke der Achse (10) des Spulenkerns übermäßig zunimmt.

3. Spule nach einem der Ansprüche 1 bis 2, dadurch gekennzeichnet, daß die Länge des Vorspannabschnitts etwa 5 cm beträgt.

4. Spule nach einem der Ansprüche 1 bis 3, dadurch gekennzeichnet, daß der Vorspannabschnitt (14) an der ersten Achse angeklebt ist.

5. Spule nach einem der Ansprüche 1 bis 3, dadurch gekennzeichnet, daß der Vorspannabschnitt an der ersten Achse mit einem Klebemittel befestigt ist.

6. Spule nach einem der Ansprüche 1 bis 5, dadurch gekennzeichnet, daß der Vorspannabschnitt an dem bandförmigen Material (15) angeklebt ist.

7. Spule nach einem der Ansprüche 1 bis 5, dadurch gekennzeichnet, daß der Vorspannabschnitt (14) an dem bandförmigen Material mit einem Klebemittel befestigt ist.

8. Spulenkern für bandförmiges Material, bei dem das Ende des bandförmigen Materials (15) mittels eines Vorspannabschnitts (14) an dem Spulenkern befestigt ist und in dem Spulenkern zwei parallel verlaufende Achsen (11, 12) angeordnet sind, wobei
- auf der ersten Achse (11) eines der Enden des Vorspannabschnitts durch geeignete Mittel befestigt und der Vorspannabschnitt (14) aufgewickelt ist, und
- auf der zweiten Achse (12), die der Spulenachse entspricht, das bandförmige Material (15) aufgewickelt ist, das durch geeignete Mittel an dem freien Ende des Vorspannabschnitts (14) befestigt ist,
dadurch gekennzeichnet, daß die beiden Achsen im Abstand voneinander angeordnet sind.

## Claims

1. Spool comprising a shell (1) having substantially on its full length a narrow opening (2) and containing a roll of web material wound on a core (5) and designed to be delivered by the opening (2) of the shell (1), the end of said web being secured to the core by means of a leader (14), which length is such that when it is unwound, said leader comes out of said narrow opening (2), in order to be able to hook an end of said web (15), said core defining two winding parallel axes (11, 12), a first axis (11) to which one of the leader ends is secured by an appropriate means and around which the leader is wound, a second axis (12) corresponding to the spool axis and around which the web (15) is wound, the winding support being defined by the core surface which is physically discontinued at least on one part of its circumference, at the level of the leader winding area on a width at least equal to the leader width, the end of the web being secured by an appropriate means to the free end of the leader, characterized in that, said two axes (11, 12) are distant from one another in such a manner that after said web material is completely unwound, by traction on the web, said leader remains wound on said first axis (11) and does not come out from said narrow opening (2).

2. Spool according to claim 1, characterized in that the leader (14) is wound on the first axis (11), without excessive thickness with respect to the core shaft (10).

3. Spool according to any of the claims 1 to 2, characterized in that the leader length (14) is in the order of 5 cm.

4. Spool according to any of the claims 1 to 3, characterized in that the leader (14) is secured to the first axis by glueing.

5. Spool (11) according to any of the claims 1 to 3, characterized in that the leader is secured to the first axis by means of an adhesive.

6. Spool according to any of the claims 1 to 5, characterized in that the leader is secured to the web (15) by glueing.

7. Spool according to any of the claims 1 to 5, characterized in that the leader (14) is secured to the web by means of an adhesive.

8. Spool core for web material in which the end of said web material (15) is secured to the core by means of a leader (14), said core defining two parallel axes (11, 12) :
- a first axis (11) to which one of the ends of the leader is secured by appropriate means and around which the leader (14) is wound
- a second axis (12) corresponding to the spool axis and around which the web (15) is wound, said web (15) being secured to the free end of the leader (14) by any appropriate means, said core being characterized in that said two axes are distant from one another.
